# EUROPEAN PATENT APPLICATION

(11) **EP 2 505 065 A1**
(43) Date of publication of application: **03.10.2012**
(21) Application number: 11425086.3
(22) Date of filing: 01.04.2011
(51) Int. Cl.: A21B 7/00, F24C 7/08

(54) **An apparatus and a method for processing and cooking a food preparation**

(71) Applicant: Barilla G. e R. Fratelli S.p.A., 43100 Parma (IT)
(72) Inventor: Torricelli, Roberto, 43122 Parma (IT); Giovanetti, Marco, 43123 Parma (IT)
(74) Representative: Ferreccio, Rinaldo

(57) **Abstract**

An apparatus (1) for the fully-automated processing and subsequent cooking of a preparation (100) of food ingredients, said apparatus (1) comprising a preparation and cooking chamber (60) of the preparation, processing means (15) operating within said preparation and cooking chamber (60), heating means (30) of said preparation and cooking chamber (60), liquid delivery means (80) within said preparation and cooking chamber (60) and reading means (102) arranged to acquire a plurality of preparation parameters stored on a support (101) associated with the preparation (100) and transmit them to control means (40), said control means (40) arranged to operate said processing means (15), said heating means (30) and said liquid delivery means (80) based on said preparation parameters.

## Description

### Field of application

The present invention relates to an apparatus for processing and cooking food preparations of different kinds comprising ingredients which must be processed and then cooked.

In particular, the present invention relates to an apparatus for automatically processing and cooking both bakery products and first courses and soups requiring to be previously prepared before being cooked, such as for example bread or confectionery products of different types and kinds, pasta, rice-based soups.

The invention also relates to a system comprising an apparatus as above described and a food preparation to be used with the apparatus itself.

The invention also relates to a method for processing and cooking a food preparation by using the above-mentioned apparatus.

### Prior art

The electrical household appliance market has for a long time offered apparatuses for preparing bakery products, such as mixer ovens intended to produce bread and the like. These apparatuses, although having a reduced size intrinsic with domestic use, integrate inside them the functions of a mixer and an oven, in order to be able to perform almost automatically all the operations necessary to obtain a bakery product starting from flour, water and baking powder, with possible additional ingredients.

In particular, the apparatuses in question have a container, located within a cooking chamber, equipped with one or more mixing blades operated by an electric motor. Putting the flour and any other ingredients into the container and subsequently starting the electric motor thus allows a mixture to be obtained; once a possible leavening step has lapsed, suitable heating means raise the temperature within the cooking chamber in order to cook the obtained mixture. An electronic control unit, being programmable by the operator, automatically controls the various above-mentioned steps.

Although these apparatuses considerably simplify the preparation process of a bakery product, they require however a series of preliminary operations to be performed by the operator, such as putting in the required amount of water for correct mixing of the ingredients and programming the device on the basis of the recipe desired by the user. Another operation proving to be useful is removing the mixing blades before the leavening and cooking steps, so as to avoid that the same become entrapped in the dough of the finished bakery product. It must also be noted that different bakery products, obtainable from different flours, imply different mixing, leavening and cooking times and modes. Moreover, also the relative quantity of water or other liquids to be added in order to obtain the mixture can vary considerably from one recipe to another. An operator intending to try new recipes, when lacking of the necessary experience, will have difficulties in evaluating the optimum quantities and preparation parameters, risking to meet with disappointing results.

The same problem can be found with certain aspects also of the preparation of first courses or more or less elaborate soups starting from ingredients to be amalgamated together by adding water.

The technical problem underlying the present invention is to provide an apparatus for automatically processing and cooking a food preparation allowing the solution of the above-mentioned technical problems, limiting to a minimum the operator's intervention and ensuring a proper preparation, irrespective of the latter's skill.

### Summary of the invention

The above-mentioned technical problem is solved by an apparatus according to claim 1.

One skilled in the art will appreciate how the apparatus according to claim 1, once the preparation parameters defining the recipe of a preparation, such as for example a bakery product, have been established, allows said preparation to be automatically processed and cooked, limiting the operator's intervention to only putting the preparation ingredients into the preparation chamber.

In particular, preparation parameters can identify the times and modes of the heating of the preparation chamber, the kneading of the preparation mixture, or even of a possible chamber pre-heating during the preparation ingredient mixing.

Preparation parameters can also identify the leavening times of a mixture being obtained starting from the preparation ingredients, mainly in case of a bakery product, as well as the quantity of liquid to be added to the preparation ingredients in order to obtain said mixture.

Liquid delivery means can comprise a liquid tank, being connected to the preparation chamber by means of a duct, and a pump for feeding liquid through said duct towards said preparation chamber. Naturally several technical alternatives known to persons skilled in the art can be adopted in order to allow the liquid to be fed into the preparation chamber commanded by the control means: for example the pump can be replaced by a simple solenoid valve when the tank is at a higher level than the preparation chamber.

Reading means can comprise an RFID reader while the support can comprise an RFID label. In particular, the RFID label can advantageously comprise a passive transponder with a memory preferably of the read-only type, in order to prevent manipulation of the support that would alter the optimal behaviour of the apparatus regarding the preparation to be processed and cooked.

It should be noted that the reading means and support must not necessarily use radio-frequency technology. In fact several alternative solutions can be adopted for transmitting data between the preparation and the processing and cooking apparatus, all being well known and evident to persons skilled in the art. For example a bar code coding the preparation and cooking parameters, acquirable in this case by an optical reader integrated in the food preparation processing and cooking apparatus, can be associated to the preparation.

In a particular embodiment, processing means can comprise a mixing blade which can be rotationally operated within a container along a rotational axis that is perpendicular to a bottom plane thereof, said mixing blade being hinged near the bottom plane of said container along a hinging axis perpendicular to the axis of rotation by means of a hinge, said hinge allowing the mixing blade to move angularly from an operational position wherein the mixing blade stands upright with respect to the container bottom plane and a rest position wherein the mixing blade is lying on the container bottom plane and vice versa, retaining means being arranged in order to limit said angular movement to prevent the mixing blade from rotating with respect to the hinging axis beyond the operation position. This configuration allows the mixing blade to be automatically brought in the rest position at the end of mixing operations by operating the blade itself in counter-rotation. The blade in the rest position thus cannot remain trapped in the mixture during any leavening and cooking steps thereof.

The above-mentioned technical problem is also solved by a system for processing and cooking a food preparation comprising an apparatus of the above-mentioned type and at least a food preparation with which a support is associated, a plurality of preparation parameters identifying the preparation and cooking modes of the preparation with which it is associated being stored on said support, said support being able to communicate with a reader directly associated with said apparatus.

The above-mentioned technical problem is also solved by a method for processing and cooking a food preparation with an apparatus of the above-described type, comprising the steps of:
- acquiring the plurality of preparation parameters stored on the support associated with the prepared ingredients by means of reading means;
- transmitting said plurality of acquired preparation parameters to control means;

- putting the preparation ingredients into the preparation chamber;
- operating, through said control means, delivery means for the liquid in order to put a quantity of liquid identified by the preparation parameters into the preparation chamber;
- operating, through control means, processing means obtaining a mixture on the basis of the ingredients and the liquid put into the preparation chamber;
- operating, through control means, heating means according to modes identified by said preparation parameters, performing the cooking of the previously obtained mixture;

The method can advantageously comprise a possible waiting period after the activation step of the processing means and before the activation step of the heating means , the presence and duration of said step being identified by said preparation parameters. This step allows the mixture obtained by the operation of the processing means to raise if necessary.

Heating means can be operated by the control means and according to modes being identified by said preparation parameters, even during the activation step of the processing means , in order to facilitate the kneading step in certain cases.

The processing means can be operated during the activation step according to modes identified by said preparation parameters: for example preparation parameters can identify the power delivered to the processing means during their operation.

Further features and advantages will be more apparent from the following detailed description of two preferred, but not exclusive, embodiments of the present invention, with reference to the attached drawings, given by way of non-limiting examples.

### Brief description of the drawings

- Figure 1 is a schematic sectional view along a vertical plane of an apparatus for processing and cooking a food preparation according to the present invention;
- Figure 2 is a perspective view of a component of the apparatus according to a preferred embodiment, arranged in a first configuration;
- Figure 3 is a perspective view of the component of Figure 2 arranged in a second configuration.

### Detailed description

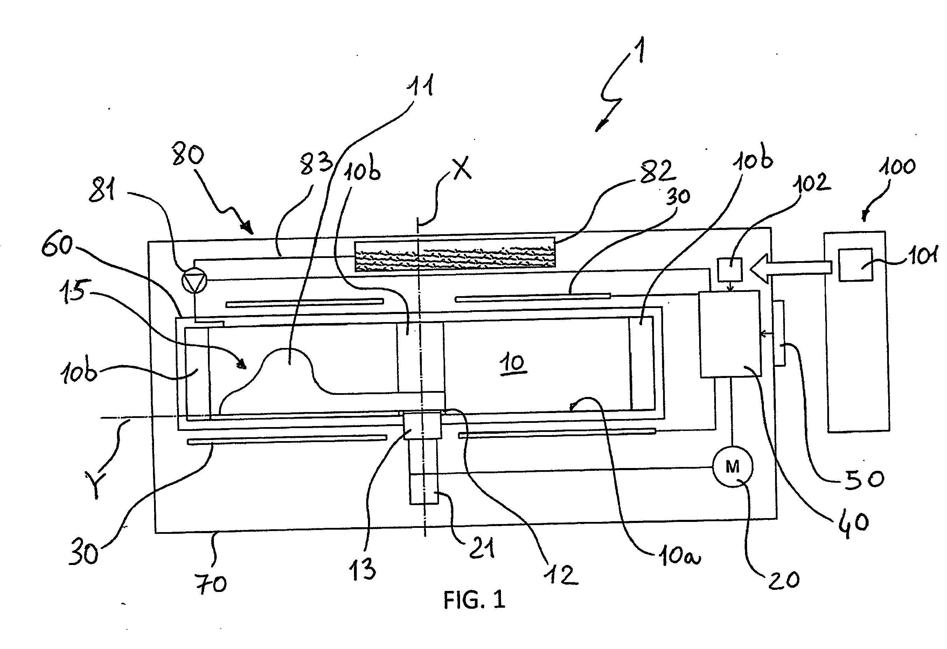

With reference to Figure 1, an apparatus for processing and cooking a food preparation, in particular for preparing bread, bakery products or soups, has being identified with reference number 1.

This apparatus 1 comprises an external housing 70 inside of which a preparation and cooking chamber 60 is defined. In this preparation and cooking chamber 60 a cylindrical container 10 is removably placed, arranged to receive a food preparation, comprising for example flour and other dry ingredients, or pasta or rice with other dry ingredients. In Figure 1 this preparation is generally indicated with the reference numeral 100.

In the example, the preparation chamber has an internal cavity that fully resembles these typical of traditional ovens.

The operations of adding water to the preparation, kneading, possibly leavening and subsequently cooking the processed preparation are performed in the container 10. These steps are performed in an automatical manner by a plurality of means operating inside the preparation and cooking chamber 60.

In particular the apparatus 1 comprises liquid delivery means 80 assigned to filling up the container 10 with the quantity of water being suitable for allowing the preparation ingredients to be properly amalgamated; processing means 15 intended for the mixing and/or kneading step and heating means 30 intended to the final cooking step of the processed preparation.

Liquid delivery means 80 comprise in this case a liquid tank 82, placed within the external housing 70, connected to the preparation and cooking chamber 60 by means of a duct 83. A pump 81 allows the liquid to be fed through the duct 83 into the preparation and cooking chamber 60. In particular the duct 83 is shaped in such a way that, when the container 10 is positioned within the preparation and cooking chamber 60, the output liquid flows into the container 10, gradually filling it up. It must be noted that the liquid tank 82 is preferably able to contain water, which is used in most of the food product preparations.

Heating means 30 in the present case take the form of one or more resistors and a fan (the latter is not shown). Resistors serve to raise the temperature within the preparation and cooking chamber 60, so that the apparatus can perform the oven function for which it is intended.

Finally, processing means 15 comprise an electric motor 20, a mixing blade 11 and the kinematical connection means being described hereafter. The electric motor 20 is placed within the external housing 70 in a recess separate from the preparation and cooking chamber 60, possibly thermally insulated with respect to the latter. Said electric motor 20 is kinematically connected, for example by means of a belt drive, to a shaft 21 rotating along a vertical axis of rotation X. The upper part of said shaft 21 faces the bottom of the preparation and cooking chamber 60, and it has a coupling profile intended to allow it to be engaged with another element.

The bottom wall is crossed, in a central point thereof, by a hole housing an insert 13 rotating with respect to the container 10. The rotating insert 13 has a lower coupling profile intended to engage the coupling profile of the shaft 21, allowing the realisation of a kinematical coupling between the two elements when the container 10 is properly inserted into the preparation and cooking chamber 60.

An end of the mixing blade 11 is attached to the rotating insert 13 of the container 10; from this end the mixing blade mainly extends in a radial direction towards the side wall of the container 10.

The mixing blade 11 has a substantially planar profile, having a thickness comprised between 1 mm and 5 mm and thus presenting two opposed plane faces. An upper edge of the blade has a curved profile, provided with a protuberance 11d that is higher at its peripheral end; its lower rectilinear edge 11a instead is positioned so as to graze a bottom plane 10a of the container 10.

When the container 10 is properly placed within the preparation and cooking chamber 60, the rotating insert 13 engages the shaft 21 creating a kinematical connection between the electric motor 20 and the mixing blade 11. The mixing blade 11 can then be made to rotate by the electric motor 20 according to the previously identified vertical axis of rotation X.

The apparatus 1 comprises control means 40 of the different means for the automatic execution of the processing and cooking operations, such as liquid delivery means 80, heating means 30 and processing means 15. These control means 40 are in the form of an electronic control unit, able to send operational commands to the pump 81, to thermal plates 30 and to the electric motor 20 respectively.

A control interface 50 allowing an operator to set and operate the apparatus 1 is suitably connected to the electronic control unit 40.

According to the present invention, the apparatus 1 also comprises reading means 102, arranged to acquire a plurality of preparation parameters stored on a support 101 associated with the ingredient preparation 100.

In the preferred embodiment here described, the reading means 102 and support 101 define a radio-frequency identification system (RFID). Reading means thus take the form of an RFID reader being capable to interrogate the support 101, composed of an RFID label associated with the external housing of the packaging of the ingredient preparation 100. The RFID label 101 preferably comprises a passive transponder provided with a read-only memory.

Preparation parameters are stored in this memory, i.e. parameters concerning the specific preparation modes of the related ingredient preparation 100.

The RFID reader 102 is electronically connected with the electronic control unit 40, so that the preparation parameters detected through the reading of the RFID label 101 can be transmitted in the form of a signal to this unit.

By processing the signal received, the electronic control unit 40 is thus capable of turning preparation parameters into a series of operation commands that are sequentially given to the pump 81, to thermal plates 30 and to the electric motor 20.

The preparation parameters acquired by the RFID reader 102 can be concerned with the quantity of liquid to be added to the ingredients of the preparation 100 put into the container 10, the duration and the method of the kneading, possible leavening and finally the cooking step, as will become clearer from the following description of the operation of apparatus 1.

According to a preferred embodiment, the container 10 has a substantially cylindrical shape defined by a side wall and by a bottom wall, which interiorly defines the bottom plane 10a. A plurality of semicylindrically shaped impressions 10b protrude along the internal profile of the side wall. More particularly there are four shaped impressions , equidistant along the profile of the side wall.

The mixing blade 11 has a front face 11b and an opposite rear face 11c connected to the rotating insert 13 of the container 10 by means of a hinge 12.

The hinge 12 also allows the mixing blade 11 to move angularly along a radial hinging axis Y with respect to the container 10; this axis therefore projects itself orthogonally with respect to the axis of rotation X of the blade 11.

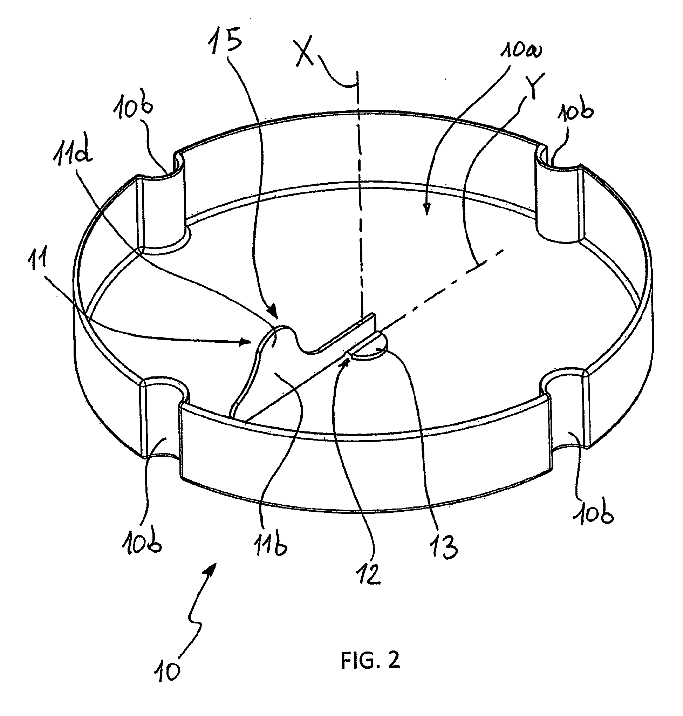

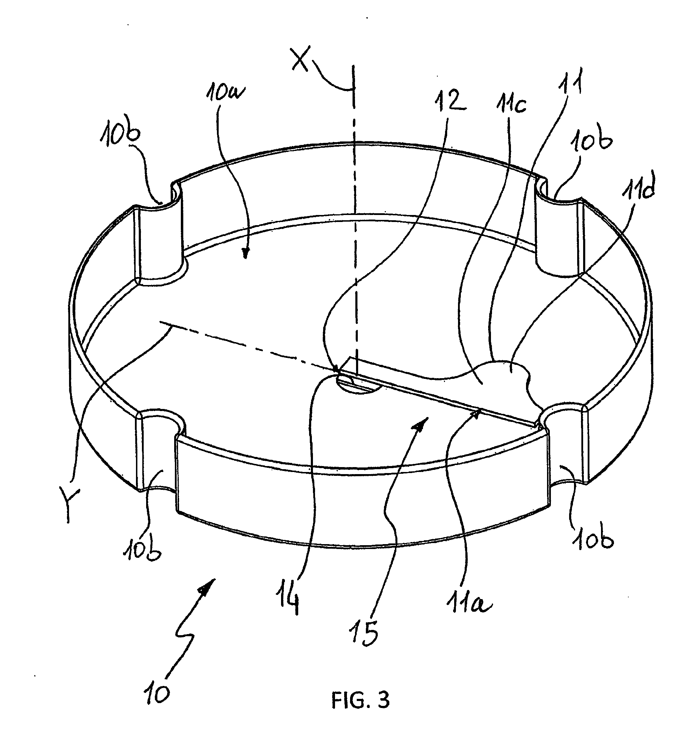

The angular movement along the hinging axis Y allows the mixing blade 11 to rotate between an unfolded operational position (Fig.2) and a folded rest position (Fig.3).

In the operational position, shown in figure 2, the mixing blade 11 stands upright with respect to the bottom plane of the container 10a, forming with said plane a substantially right angle. In this position the mixing blade 11 is capable of performing the actual mixing of the ingredients that were put into the container 10.

In particular, the mixing blade 11 is shaped in such a way that, in said operational position, the lower edge 11a thereof grazes the bottom plane 10a of the container 10 when the blade itself moves in rotation.

Moreover, the mixing blade 11 radially extends so as to pass near the shaped impressions 10b of the container during its rotation. In this way the blade cooperates with these impressions in order to obtain a better kneading.

In the rest position, shown in figure 3, the mixing blade 11 is folded so as to lie on the bottom plane 10a of the container 10. In this position the mixing blade 11 cannot perform mixing operations; on the other hand this position is advantageous for the following possible leavening of bakery products and the subsequent cooking of the recently processed mixture, since the folded mixing blade 11 is placed levelly underneath the mixture, so as to ensure that the bakery product at the end of the cooking time does not present any cavities at the location of the blade, as typically happens in traditional apparatuses.

The angular movement of the mixing blade 11 along to the hinging axis Y is limited on the one side by the impact of the front face of the blade 11b against the bottom plane 10a of the container 10, on the other side by retaining means arranged to prevent the operation position to be overtaken during the unfolding of the blade.

In this particular case, these retaining means take the form of a stopping shoulder 14 created on the rotating insert 13, against which a portion of the rear face 11c abuts when the mixing blade 11 is in the operational position.

Operationally, the above-mentioned apparatus for preparing a bakery product 1 can be used to prepare a bakery product according to a method comprising the following steps.

In a preliminary step of acquiring the preparation parameters, the operator brings the RFID label 101 associated with the ingredient preparation close to the RFID reader 102, which is operated by the control interface 50. Upon activation, the RFID reader 102 interrogates the RFID label 101 obtaining the preparation parameters of the recipe related to the particular preparation to be processed and cooked, parameters which are then transmitted to the electronic control unit 40 which temporarily stores them in a volatile memory.

In an ingredient arrangement step, the ingredients comprised within the preparation package 100 are put within the container 10, intended to produce a particular mixture, for example a bread mixture, or to produce a first course. This step is also preferably performed by a human operator, who can extract the container 10 from the preparation and cooking chamber 60 to facilitate the insertion of the ingredients. Once the insertion is completed, the operator must in any case properly replace the container 10 inside the preparation and cooking chamber 60, taking care that the rotating insert 13 is engaged on the shaft 21.

At the end of this step, the operator can activate the apparatus 1 by means of the control interface 50, so that the subsequent steps are performed in a fully automatic way by the apparatus 1. From this point onwards the apparatus 1 will operate according to the preparation parameters acquired previously.

In a first water addition step, the electronic control unit 40 controls the pump 81 in order to add the right quantity of water set by preparation parameters.

A possible pre-heating step follows, wherein the electronic control unit 40 can activate heating plates 30 in order to bring all the ingredients inside the container 10 to a suitable kneading or mixing temperature. The need for this step and the intensity of the activation of the plate is given by the control unit 40 in function of the preparation parameters acquired from the reading of the RFID label 101.

In a following kneading step the electronic control unit 40 operates the electric motor 20 in order to bring the mixing blade 11 in rotation with respect to the axis of rotation X. The duration of this mixing step is adjusted by the preparation parameters; moreover these parameters could also define the rotation speed of the mixing blade 11, provided that the electric motor 20 is equipped with an inverter or with other electronic means for speed adjustment.

If the mixing blade 11 is of the folding type, it is operated in a first direction of rotation during the real kneading step, after which the blade 11 is operated in the opposite direction for a limited length of time to allow the blade to be folded.

The first direction of rotation is such that the mixing blade 11, in the operational position, moves in the direction going from its rear face 11c to its front face 11b, in the example of figures 2 and 3 counterclockwise. It is thus the front face 11b that exerts a pressure on the ingredients to be kneaded during the operation.

When it is operated in rotation, the mixing blade 11 can be in the operation position (upright) or in the rest position (lying).

When the blade is in the operational position, the pressure of the ingredients on the front face 11b thereof and the opposite constraining action of the stopping shoulder 14 contribute to keep it in such a position.

On the contrary when it is in the rest position, the pressure of the ingredients on the edge of the blade, in combination with the rotation of the blade 11, will unfold the blade until it reaches the operational position, wherein it is balanced by the above-mentioned constraining action.

In both cases, the mixing blade 11 will be in the operational position, being able to perform its function. The ingredients are then mixed to form a mixture with the desired consistency.

At the end of the kneading step the folding step of the mixing blade 11 is provided.

In this step, the electronic control unit 40 operates the electric motor 20 in counter-rotation with respect to the previous step, thus rotating the mixing blade 11 for a short length of time in a direction of rotation that is opposite the previously-determined first direction of rotation, in the example of figures 2 and 3 clockwise.

By operating the blade in counter-rotation, the pressure of the mixture that is being formed no longer acts against the front face 11b of the blade, as in the previous case, but against the rear face 11c thereof. This pressure is no longer balanced by the constraining reaction of the stopping shoulder 14, and this causes the mixing blade 11 to overturn from the operational position to the rest position, wherein the mixing blade 11 is placed with its face against the bottom plane 10a of the container. Thanks to this mode of operation the mixing blade 11 will not become trapped in the mixture during the subsequent cooking step.

The method then provides a possible waiting step intended to allow the mixture to leaven; the duration and the presence of this step are once again set by the preparation parameters stored in the volatile memory of the electronic control unit 40.

Finally a final cooking step is provided, wherein the electronic control unit 40 operates the heating resistors 30, with duration and level of intensity set by the preparation parameters, so as to perform the final cooking of the mixture, in order to obtain the desired food.

As can be appreciated from the above, the apparatus for processing and cooking a food product and the related method according to the present invention meet the needs and overcome the drawbacks described in the introduction of the present invention with reference to the prior art.

Obviously, a person skilled in the art, with the aim of meeting contingent and specific requirements, will be able to apply several changes and variations to the above-described apparatus and method for processing and cooking a food product, all of which however fall within the scope of protection of the invention, as defined by the following claims.

## Claims

1. An apparatus (1) for the fully-automated processing and subsequent cooking of a preparation (100) of food ingredients, comprising a chamber for preparation and cooking (60) of the preparation, processing means (15) operating within said preparation and cooking chamber (60), heating means (30) of said preparation and cooking chamber (60), control means (40), **characterised in that** it also comprises liquid delivery means (80) within said preparation and cooking chamber (60), and reading means (102) directly associated to said apparatus (1), said reading means (102) being arranged to acquire a plurality of preparation parameters being stored on a support (101) associated to the preparation (100) in order to transmit these to said control means (40), said control means (40) being arranged to operate said processing means (15), said heating means (30) and said liquid delivery means (80) based on said preparation parameters acquired by reading the support (101) .

2. An apparatus (1) according to claim 2, wherein said preparation parameters identify the processing and heating times and modes within the preparation and cooking chamber (60).

3. An apparatus (1) according to claim 2, wherein said preparation parameters identify the modes of a possible pre-heating of the preparation and cooking chamber (60) during the processing of the products contained therein.

4. An apparatus (1) according to any of the previous claims, wherein said preparation parameters identify the leavening times of a mixture obtained from the ingredients of the preparation (100).

5. An apparatus (1) according to claim 3, wherein said preparation parameters identify the quantity of liquid to be added to the ingredients of the preparation (100) to obtain said mixture.

6. An apparatus (1) according to any of the previous claims, wherein the liquid delivery means (80) comprise a liquid tank (82), connected to the preparation and cooking chamber (60) by means of a duct (83), and a pump (81) for feeding the liquid through said duct (83) towards said preparation and cooking chamber (60).

7. An apparatus (1) according to any of the previous claims, wherein said reading means (102) comprise an RFID reader, said support (101) comprising an RFID label.

8. An apparatus (1) according to any of the previous claims, wherein said processing means comprise a mixing blade (11) which can be operated in rotation within the container (10) along an axis of rotation (X) that is perpendicular to a bottom plane (10a) thereof, said mixing blade (11) being hinged near the bottom plane (10a) of said container along a hinging axis (Y) that is perpendicular to the axis of rotation (X) by means of a hinge (12), said hinge (12) allowing the mixing blade (11) to move angularly from an operational position wherein the mixing blade (11) stands upright with respect to the bottom plane (10a) of the container (10) and a rest position wherein the mixing blade (11) is lying on the bottom plane (10a) of the container (10) and vice versa, retaining means being arranged to limit said angular movement so as to prevent the rotation of the mixing blade (11) with respect to the hinging axis (Y) beyond the operational position.

9. A system for the fully-automated processing and subsequent cooking of a food preparation (100) comprising an apparatus (1) according to any of the previous claims and at least a food preparation (100) with which a support (101) is associated, a plurality of preparation parameters identifying the preparation and cooking modes of the preparation (100) by means of said apparatus (1) stored on said support (101).

10. A system according to claim 9, wherein said support (101) comprises an RFID label storing data being specific of the preparation (100) to which it is applied, said specific data comprising at least data related to the duration of a processing step and to the preparation cooking duration/temperature.

11. A system according to claim 10, wherein said preparation (100) is a product chosen between: leavened bakery product, pasta, rice, vegetable soup and soup.

12. A method for processing and cooking a preparation (100) of food ingredients by means of an apparatus (1) according to any of claims 1-9, comprising the steps of:
- acquiring a plurality of preparation parameters stored on a support (101) associated with the preparation (100) through reading means (102) being directly associated with the apparatus (1);
- transmitting said acquired plurality of preparation parameters to control means (40);
- putting into a preparation and cooking chamber (60) the ingredients of the preparation (100);
- operating, through said control means (40), liquid delivery means (80) in order to put a quantity of liquid determined by preparation parameters into the preparation and cooking chamber (60);
- operating, through control means (40), processing means (15) to obtain a mixture starting from the ingredients and the liquid put into the preparation and cooking chamber (60);
- operating, through control means (40), heating means (30) according to modes determined by said preparation parameters, in order to perform the cooking of the previously obtained mixture.

13. A method according to claim 12, also comprising a possible waiting step after the step of activating the processing means (15) and before the step of activating the heating means (30), the presence and duration of said waiting step being identified by said preparation parameters.

14. A method according to one of claims 12 or 13, wherein said heating means (30) are operated, through control means (40) and according to modes determined by said preparation parameters, also during the step of the activating of the processing means (15).

15. A method according to one of claims 12 to 14, wherein, during the step of activating the processing means (15), the latter are operated according to modes determined by said preparation parameters.
